# EUROPEAN PATENT SPECIFICATION

(11) **EP 0 933 377 B1**
(45) Date of publication and mention of the grant of the patent: **24.11.2004**
(21) Application number: 99101960.5
(22) Date of filing: 29.01.1999
(51) Int. Cl.: C07F 7/18, G02B 1/10, G02B 1/11

(54) **Anti-smudge agent, method of forming an anti-smudge layer, anti-reflection optical member and display device**
Antischmier-Mittel, Verfahren zur Herstellung einer Antischmier-Schicht, optisches Bauteil mit Antireflexions Eigenschaften und Anzeigevorrichtung
Agent anti-souillure, procédé de préparation d'une couche anti-souillure, élément optique antiréfléchissant et dispositif d'affichage

(30) Priority: 31.01.1998 JP 3432898; 08.09.1998 JP 25408998
(43) Date of publication of application: 04.08.1999
(73) Proprietor: Toppan Printing Co., Ltd., Taito-ku, Tokyo (JP); Daikin Industries, Ltd., Osaka (JP)
(72) Inventor: Ohata, Koichi, Kitakatsushika-gun, Saitama-ken (JP); Watanabe,Niro, Fukaya-shi, Saitama-ken (JP); Okubo,Toru, Kitakatsushika-gun, Saitama-ken (JP); Miida,Atsushi, Kitakatsushika-gun, Saitama-ken (JP); Tomikawa, Noritoshi, Kitakatsushika-gun Saitama-ken (JP); Honda, Yoshitaka c/o Chemical Division, Settsu-shi Osaka-fu (JP)
(74) Representative: Leson, Thomas Johannes Alois, Dipl.-Ing.

(56) References cited:
- EP-A- 0 797 111
- US-A- 4 687 707
- US-A- 4 944 962
- US-A- 5 461 173
- DATABASE WPI Section Ch, Week 199237 Derwent Publications Ltd., London, GB; Class A26, AN 1992-305510 XP002151919 -& JP 04 213384 A (ASAHI GLASS CO LTD), 4 August 1992 (1992-08-04)

## Description

This invention relates to an anti-smudge agent for forming an anti-smudge layer on the surface of various kinds of substrate to be treated (hereinafter referred to simply as a treating substrate) and requiring an anti-smudge property, and to a method of forming an anti-smudge layer by making use of this anti-smudge agent. Additionally, this invention relates to an anti-reflection optical member which is adapted to be applied to the surface of display screen of an optical member (such as an anti-reflection film, an optical filter, an optical lens, spectacle lens, beam splitter, prism, mirror, etc.) and a device (such as a liquid crystal display, a CRT display, a projection television, a plasma display, an EL display, etc.), to an optical functional member, and to a display device wherein this optical functional member is adhered to the surface of display screen of the display device.

Optical members such as an anti-reflection film, an optical filter, an optical lens, spectacle lens, beam splitter, prism, mirror, etc. are liable to be soiled with smudges originating from fingerprints, skin fat, sweat, cosmetics, etc. as these members are employed by an operator. Once these members are soiled with these smudges, it is very difficult to remove them. Particularly in the case of an optical member provided with an antireflection coating, the smudge adhered to the antireflection coating stands out from the coating, thus raising a problem.

Meanwhile, most of display devices are generally employed under the condition that external light enters freely into the display screen from the inside as well as outside of the room.

The incident light like this external light is mirror-reflected by the surface of the display screen, thus causing a mixing of images between the reflected image and the displayed image, resulting in the deterioration of the display quality and hence the blurring of the display image.

In particular, since the frequency of using a computer has been recently increased with an progress of office automation, and hence the time during which an operator stares at the display screen has been also increased recently, the deterioration of display quality due to the reflection image is now considered as being one of the causes for bringing about a health hazard such as the fatigue of eyes.

Furthermore, with an increasing popularization of out-door life in recent years, the opportunity of using various kinds of display device outside the door is increasing now. As a result, it is now demanded to improve the quality of display so as to enable a display image to be recognized more clearly.

With a view to meet these demands, there has been conventionally proposed an idea of attaching a reflection preventive optical member to the surface of the display screen, this reflection preventive optical member being capable of preventing the reflection of light over a wide range of visible light. One example of such a reflection preventive optical member is a laminate film comprising a transparent substrate on the surface which a high refractive index layer and a low refractive index layer both consisting of a metal oxide are laminated. There is also known a reflection preventive optical member which is formed of a laminate film comprising a transparent substrate on the surface which a low refractive index layer consisting of an inorganic or organic fluorine compound is laminated.

On the other hand, it is also known that the same effect as that of a reflection preventive optical member can be obtained by the employment of an irregular reflective film comprising a transparent plastic film substrate on the surface of which a coating layer containing transparent fine particles is deposited to form a rugged surface so as to cause the external light to be irregularly reflected by the rugged surface.

In the meantime, the aforementioned reflection preventive optical members tend to be soiled with smudges originating from fingerprints, skin fat, sweat, cosmetics, etc. as the display device provided with this reflection preventive optical member is employed by an operator. Specifically, since the surface energy of the reflection preventive film is generally as large as 60 J/m² or so, the reflection preventive film is more likely to be soiled with these smudges. Further, since the surface of the reflection preventive film is constituted by a finely roughened surface, once these smudges are adhered onto the reflection preventive film, it is very difficult to remove them. Further, there is also a problem that when these smudges are adhered to a portion of the reflection preventive film, the soiled portion becomes more reflective, thereby rendering the soiled portion to stand out from the remaining portion.

With a view to solve this problem of the smudge on the surface of reflection preventive optical member, various techniques for forming an anti-smudge layer which is capable of preventing smudges from adhering thereon and capable of easily removing the adhered smudges have been proposed up to date.

Japanese Patent Unexamined Publication S64-86101 teaches a reflection preventive article having anti-smudge and abrasion resistive properties wherein the surface of the substrate is covered with a reflection preventive film consisting mainly of silicon dioxide, and the resultant surface is further treated with a compound containing an organosilicic substituent group. Japanese Patent Unexamined Publication H4-338901 teaches a CRT filter having anti-smudge and abrasion resistive properties, whose substrate surface is covered with a terminal silanol organopolysiloxane. Japanese Patent Publication H6-29332 teaches an anti-smudge/low reflectance plastic covered on its surface with a refection preventive film containing mono- and di-silane compounds containing polyfluoroalkyl group, and a silanized halogen, alkyl or alkoxy compound. Further, Japanese Patent Unexamined Publication H7-16940 teaches an optical member comprising an optical thin film consisting mainly of silicon dioxide, on which a copolymer consisting of perfluoroalkyl(meta)acrylate and a monomer having alkoxy silane group is formed.

EP-A-0 797 111 describes a composition for forming an antifouling film, containing an alkoxysilane compound from the type R_{f}(COR₁-R₂-Si(OR₃)₃)ⱼ having a perfluoropolyether group R_{f}.

The US Patent No. 4,687,707 discloses a low reflectance transparent material having anti-soiling properties comprising a thin layer coating of a condensation product of a fluorine-containing silicon compound R^{f}-O-(C₃F₆O)ₙ-CF(CF₃)CH₂O(CH₂)₃-SiR'₃ (n=1-3) having a perfluorocarbon chain.

JP-A-04 213 384 describes an organic silicon compound with several branched perfluorooxyalkylene groups as a stain proof coating agent.

However, the anti-smudge layer manufactured according to these conventional methods is insufficient in anti-smudge property, incapable of allowing a smudge such as fingerprints, skin fat, sweat, cosmetics, etc. to be easily removed therefrom, and poor in durability losing sharply its anti-smudge property with a repetition of use. Therefore, it is now desired to develop an anti-smudge layer which is excellent in anti-smudge property and in the durability of anti-smudge property.

This invention has been made to overcome the aforementioned conventional problems, and therefore, an object of this invention is to provide an anti-smudge agent, which makes it possible to obtain an anti-smudge layer which is excellent in durability of the property, capable of preventing smudges formed of fingerprints, skin fat, sweat, cosmetics, etc. from being adhered onto the surface of an optical member such as a reflection preventive film, and capable of allowing these smudges to be easily removed even if these smudges are adhered onto the optical member.

Another object of this invention is to provide a method of forming an anti-smudge layer which is capable of easily forming an anti-smudge layer which is excellent in anti-smudge property and in the durability of the anti-smudge property.

Still another object of this invention is to provide a optical member which is provided with the aforementioned anti-smudge layer.

Still another object of this invention is to provide a reflection preventive optical member which is provided with the aforementioned anti-smudge layer.

A further object of this invention is to provide an optical functional member which is provided with the aforementioned reflection preventive optical member.

A still further object of this invention is to provide a display device whose display screen surface is constituted by the aforementioned optical functional member.

According to this invention, there is provided an anti-smudge agent containing an organosilicon compound represented by the following general formula (1):

R^{f2}-(OC₃F₆)ₙ₂-O-(CF₂)ₘ₂-(CH₂)₁₂-Z-(CH₂)ₛ₂-Si-(R²)₃ (1)

wherein R^{f2} is a linear or branched perfluoroalkyl group having 1 to 16 carbon atoms; R² is a hydrolytic group; Z is -OOCNH- or -O-; n2 is an integer of 1 to 50; m2 is an integer of 0 to 3; 12 is an integer of 0 to 3; and s2 is an integer of 1 to 6, with a proviso that these m2 and 12 meet the condition of 6≧m2+12>0.

According to this invention, there is provided an anti-smudge agent containing an organosilicon compound represented by the following general formula (3): 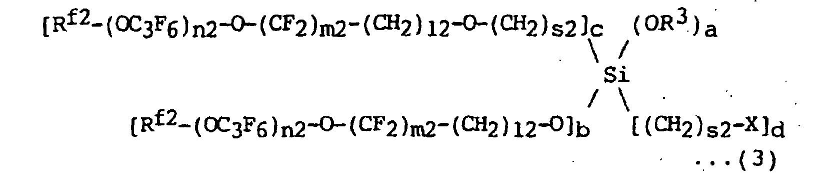 wherein R^{f2} is a linear or branched perfluoroalkyl group having 1 to 16 carbon atoms; R³ is an alkyl group having 1 to 10 carbon atoms; X is a halogen atom; n2 is an integer of 1 to 50; m2 is an integer of 0 to 3; 12 is an integer of 0 to 3; and s2 is an integer of 1 to 6; a is an integer of 0 to 3; b is an integer of 0 to 3; c is 0 or 1; d is 0 or 1; with a proviso that these m2, 12, a, b, c and d meet the conditions of 6≧ m2+12>0, a+b=3, and c+d=1.

According to this invention, there is further provided a method of forming an anti-smudge layer containing the aforementioned anti-smudge agent.

According to this invention, there is further provided an optical member provided with an anti-smudge layer containing the aforementioned anti-smudge agent.

According to this invention, there is further provided a reflection preventive optical member provided with an anti-smudge layer containing the aforementioned anti-smudge agent.

According to this invention, there is further provided an optical functional member constituted by the aforementioned reflection preventive optical member.

According to this invention, there is further provided a display device provided with the aforementioned optical functional member.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a cross-sectional view illustrating the structure of one example of reflection preventive optical member according to this invention;
FIG. 2 is a cross-sectional view illustrating the structure of one example of optical functional member according to this invention;
FIGS. 3A and 3B are schematical views each illustrating the structure of one example of display device according to this invention;
FIG. 4 is an FT-IR chart of an organosilicon compound constituting an anti-smudge agent according to this invention; and
FIG. 5 is a cross-sectional view illustrating the structure of another example of reflection preventive optical member according to this invention.

The anti-smudge agent according to this invention is characterized in that it contains a specific kind of organosilicon compound. As a result, when an anti-smudge layer is formed on the surface of a treating substrate by making use of this anti-smudge agent, it is possible, if the treating substrate is any kind of optical members such as an anti-reflection film, an optical filter, an optical lens, spectacle lens, beam splitter, prism, mirror, etc., to prevent smudges formed any of fingerprints, skin fat, sweat, cosmetics, etc. from being adhered onto the surface of these optical members, and furthermore, to easily remove these smudges adhered onto these optical members without deteriorating the optical properties of these optical members. Moreover, the anti-smudge layer formed by making use of this anti-smudge agent is excellent in durability of the property.

Namely, the anti-smudge agent according to this invention contains an organosilicon compound represented by the following general formula (1):

R^{f2}-(OC₃F₆)ₙ₂-O-(CF₂)ₘ₂-(CH₂)₁₂-Z-(CH₂)ₛ₂-Si-(R²)₃ (1)

wherein R^{f2} is a linear or branched perfluoroalkyl group having 1 to 16 carbon atoms; R² is a hydrolytic group; Z is -OOCNH- or -O-; n2 is an integer of 1 to 50; m2 is an integer of 0 to 3; 12 is an integer of 0 to 3; and s2 is an integer of 1 to 6, with a proviso that these m2 and 12 meet the condition of 6≧m2+120>0.

The number of carbon atom of the linear or branched perfluoroalkyl group to be introduced into R^{f2} is preferably in the range of from 1 to 16, more preferably in the range of from 1 to 3. Therefore, most preferable examples of R^{f2} are -CF₃, -C₂F₅, -C₃F₇, etc.

Specific examples of the hydrolytic group to be introduced into R² are -Cl, -Br, -I, -OR¹¹, -OOCR¹¹, -OC(R¹¹)C=C(R¹²)₂, -ON=C(R¹¹)₂, -ON=CR¹³, -N(R¹²)₂, - R¹²NOCR¹¹, etc., wherein R¹¹ is an aliphatic hydrocarbon group having 1 to 10 carbon atoms such as alkyl group or an aromatic hydrocarbon group having 6 to 20 carbon atoms such as phenyl group; R¹² is hydrogen atom or an aliphatic hydrocarbon group having 1 to 5 carbon atoms such as alkyl group; and R¹³ is a bivalent aliphatic hydrocarbon group having 3 to 6 carbon atoms such as alkylidene.

Most preferable examples of the hydrolytic group are -OCH₃, -OC₂H₅, -OOCCH₃, and -NH₂.

These hydrolytic groups may be included singly or in combination of two or more kinds in the organosilicon compound constituting the anti-smudge agent of this invention.

The n2 in the aforementioned general formula (1) should preferably be in the range of 1 to 30, more preferably in the range of 5 to 20. The m2 in the aforementioned general formula (1) should preferably be in the range of 1 to 2. The 12 in the aforementioned general formula (1) should preferably be in the range of 1 to 2. The s2 in the aforementioned general formula (1) should preferably be in the range of 1 to 3.

The compounds where Z is -OOCNH- in the general formula (1) may be prepared according to the following reaction formula:

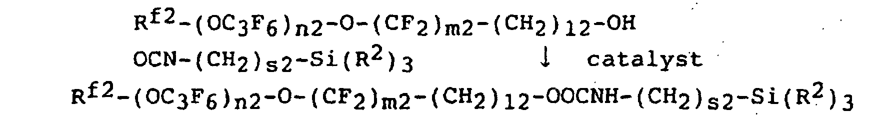

More specifically, an organosilicon compound represented by the following general formula (2D) can be obtained by allowing a fluorine resin hazing hydroxyl group and represented by the following general formula (2A) to react with catalyst and a isocyanate-based silane coupling agent represented by the following general formula (2C) in a solvent.

R^{f2}-(OC₃F₆)ₙ₂-(CF₂)ₘ₂-(CH₂)₁₂-OH (2A)

OCN-(CH₂)ₛ₂-Si(R²)₃ (2C)

R^{f2}-(OC₃F₆)ₙ₂-O-(CF₂)ₘ₂-(CH₂)₁₂-OOCNH-(CH₂)ₛ₂-Si(R²)₃ (2D)

wherein R^{f2} is a linear or branched perfluoroalkyl group having 1 to 16 carbon atoms; R² is a hydrolytic group; n2 is an integer of 1 to 50; m2 is an integer of 0 to 3; 12 is an integer of 0 to 3; and s2 is an integer of 0 to 6.

This reaction can be advantageously proceeded by using 0.001 to 0.01 mol of C₃₂H₆₄O₄Sn as a catalyst and 1 to an excess of a isocyanate-based silane coupling agent per 1 mol of a fluorine resin containing hydroxyl group and by performing the reaction at a temperature ranging from room temperature to the reflux temperature of the solvent for 2 to 72 hours. As for the solvent useful in this case, it is possible to employ an ordinary perfluoroaliphatic hydrocarbon having 5 to 12 carbon atoms, such as perfluorohexane, perfluoromethylcyclohexane, perfluoro-1,3-dimethylcyclohexane, etc.; an aromatic hydrocarbon polyfluoride such as bis(trifluoromethyl) benzene; or an aliphatic hydrocarbon polyfluoride.

The anti-smudge agent according to this invention may include, if desired, various kinds of additives in addition to the aforementioned organometallic compounds represented by the general formula (1). For example, the anti-smudge agent may contain a catalyst for promoting the hydrolysis or polycondensation of the organosilicon compounds represented by the general formula (1) or for promoting the formation of condensed urethane linkage.

As to the catalyst that can be employed in the anti-smudge agent of this invention, it is possible to employ hydrochloric acid, nitric acid, sulfuric acid, acetic acid, hydrofluoric acid, formic acid, phosphoric acid, oxalic acid, ammonia, aluminum acetylacetonate, dibutyltin dilaurate, octylate tin compound, sodium, sodium hydride, methane sulfonate, trifluoromethane sulfonate, paratoluene sulfonate, trifluoroacetate, etc. These compounds can be employed singly or in combination of two or more kinds.

The compounds where Z is -O- in the general formula (1) may be prepared according to the following reaction formula:

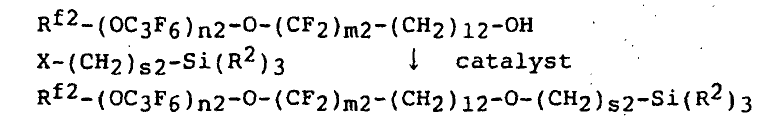

More specifically, an organosilicon compound represented by the following general formula (2E) can be obtained by allowing a fluorine resin having hydroxyl group and represented by the following general formula (2A) to react with catalyst and a halogen-based silane coupling agent represented by the following general formula (2B) in a solvent.

R^{f2}-(OC₃F₆)ₙ₂-O-(CF₂)ₘ₂-(CH₂)₁₂-OH (2A)

X-(CH₂)ₛ₂-Si(R²)₃ (2B)

R^{f2}-(OC₃F₆)ₙ₂-O-(CF₂)ₘ₂-(CH₂)₁₂-O-(CH₂)ₛ₂-Si(R²)₃ (2E)

wherein R^{f2} is a linear or branched perfluoroalkyl group having 1 to 16 carbon atoms; X is a halogen atom; R² is a hydrolytic group; n2 is an integer of 1 to 50; m2 is an integer of 0 to 3; 12 is an integer of 0 to 3; and s2 is an integer of 0 to 6.

This reaction can be advantageously proceeded by using 1 to 1.1 excess of NaH as a catalyst and 1 to an excess of a halogen-based silane coupling agent per 1 mol of a fluorine resin containing hydroxyl group and by performing the reaction at a temperature ranging from room temperature to the reflux temperature of the solvent for 2 to 72 hours. As for the solvent useful in this case, it is possible to employ an ordinary perfluoroaliphatic hydrocarbon having 5 to 12 carbon atoms, such as perfluorohexane, perfluoromethylcyclohexane, perfluoro-1,3-dimethylcyclohexane, etc.; an aromatic hydrocarbon polyfluoride such as bis(trifluoromethyl) benzene; or an aliphatic hydrocarbon polyfluoride.

The anti-smudge agent according to this invention may include, if desired, various kinds of additives in addition to the aforementioned organometallic compounds represented by the general formula (1). For example, the anti-smudge agent may contain a catalyst for promoting the hydrolysis or polycondensation of the organosilicon compounds represented by the general formula (1) or for promoting the formation of condensed ether linkage.

As to the catalyst that can be employed in the anti-smudge agent of this invention, it is possible to employ hydrochloric acid, nitric acid, sulfuric acid, acetic acid, hydrofluoric acid, formic acid, phosphoric acid, oxalic acid, ammonia, aluminum acetylacetonate, dibutyltin dilaurate, octylate tin compound, sodium, sodium hydride, methane sulfonate, trifluoromethane sulfonate, paratoluene sulfonate, trifluoroacetate, etc. These compounds can be employed singly or in combination of two or more kinds.

Another example of the organosilicon compound constituting the anti-smudge agent is an organosilicon compound represented by the following general formula (3): 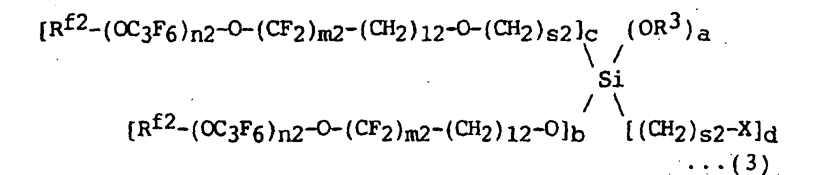 wherein R^{f2} is a linear or branched perfluoroalkyl group having 1 to 16 carbon atoms; R³ is an alkyl group having 1 to 10 carbon atoms; X is a halogen atom; n2 is an integer of 1 to 50; m2 is an integer of 0 to 3; 12 is an integer of 0 to 3; and s2 is an integer of 1 to 6; a is an integer of 0 to 3; b is an integer of 0 to 3; c is 0 or 1; d is 0 or 1; with a proviso that these m2, 12, a, b, c and d meet the conditions of 6≧m2+12>0, a+b=3, and c+d=1.

The number of carbon atom of the linear or branched perfluoroalkyl group to be introduced into R^{f2} is preferably in the range of from 1 to 16, more preferably in the range of from 1 to 3. Therefore, most preferable examples of R^{f2} are -CF₃, -C₂F₅, -C₃F₇, etc.

The number of carbon atom of the alkyl group to be introduced into R³ is preferably in the range of from 1 to 10, more preferably in the range of from 1 to 3. Therefore, most preferable examples of R³ are -CH₃, - C₂H₅, -C₃H₇, etc.

The compounds represented the general formula (3) may be prepared according to the following reaction formula:

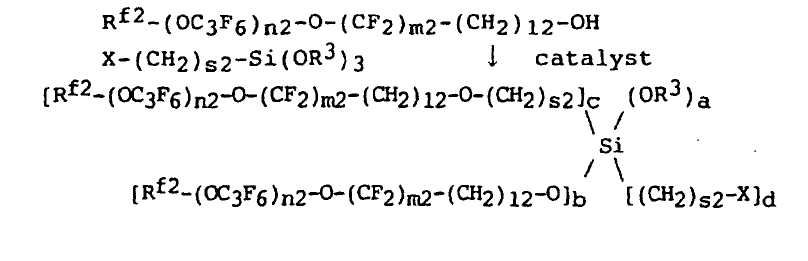

More specifically, an organosilicon compound represented by the following general formula (3) can be obtained by allowing a fluorine resin having hydroxyl group and represented by the following general formula (3A) to react with catalyst and a halogen-based silane coupling agent represented by the following general formula (3B) in a solvent.

R^{f2}-(OC₃F₆)ₙ₂-O-(CF₂)ₘ₂-(CH₂)₁₂-OH (3A)

X-(CH₂)ₛ₂-Si(OR³)₃ (3B)

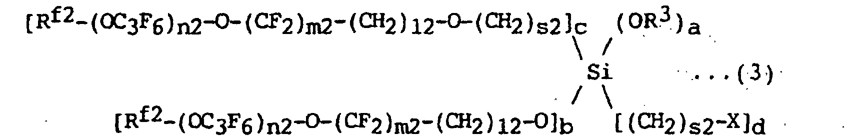

wherein R^{f2} is a linear or branched perfluoroalkyl group having 1 to 16 carbon atoms; R³ is an alkyl group having 1 to 10 carbon atoms; X is a halogen atom; n2 is an integer of 1 to 50; m2 is an integer of 0 to 3; 12 is an integer of 0 to 3; and s2 is an integer of 1 to 6; a is an integer of 0 to 3; b is an integer of 0 to 3; c is 0 or 1; d is 0 or 1; with a proviso that there m2, 12, a, b, c and d meet the conditions of 6≧m2+m2>0, a+b=3, c+d=1.

This reaction can be advantageously proceeded by using 1 to 1.1 excess of NaH as a catalyst and 1 to an excess of a halogen-based silane coupling agent per 1 mol of a fluorine resin containing hydroxyl group and by performing the reaction at a temperature ranging from room temperature to the reflux temperature of the solvent for 2 to 72 hours . As for the solvent useful in this case, it is possible to employ an ordinary perfluoroaliphatic hydrocarbon having 5 to 12 carbon atoms, such as perfluorohexane, perfluoromethylcyclohexane, perfluoro-1,3-dimethylcyclohexane, etc.; an aromatic hydrocarbon polyfluoride such as bis(trifluoromethyl) benzene; or an aliphatic hydrocarbon polyfluoride.

These organosilicon compounds represented by the aforementioned general formula (3) can be employed singly or in combination of two or more kinds for constituting the anti-smudge agent of this invention. When a mixture comprising plural kinds of these silane compounds is to be employed, the components "a", "b", "c" and "d" in the aforementioned general formula (3) should be differentiated.

The anti-smudge agent according to this invention may include, if desired, various kinds of additives in addition to the aforementioned organometallic compounds represented by the general formula (3). For example, the anti-smudge agent may contain a catalyst for promoting the hydrolysis or polycondensation of the organosilicon compounds represented by the general formula (3) or for promoting the formation of condensed ether linkage.

As to the catalyst that can be employed in the anti-smudge agent of this invention, it is possible to employ hydrochloric acid, nitric acid, sulfuric acid; acetic acid, hydrofluoric acid, formic acid, phosphoric acid, oxalic acid, ammonia, aluminum acetylacetonate, dibutyltin dilaurate, octylate tin compound, sodium, sodium hydride, methane sulfonate, trifluoromethane sulfonate, paratoluene sulfonate, trifluoroacetate, etc. These compounds can be employed singly or in combination of two or more kinds.

As for the treating substrate to which an anti-smudge layer is applied by making use of the anti-smudge agent of this invention, there is not any particular restriction, i.e. an ordinary optical member is applicable. For example, an inorganic substrate such as a glass board, a glass board comprising an inorganic compound layer; or an organic substrate such as a transparent plastic substrate, a transparent plastic substrate comprising an inorganic compound layer can be employed.

Among them, a glass board may be mainly employed as an inorganic substrate. As for the inorganic compound to be employed for constituting the glass board comprising an inorganic compound layer, it is possible to employ a metal oxide such as silicon oxide (silicon dioxide, silicon monooxide, etc.), aluminum oxide, magnesium oxide, titanium oxide, tin oxide, zirconium oxide, sodium oxide, antimony oxide, indium oxide, bismuth oxide, yttrium oxide, cerium oxide, zinc oxide, ITO (indium tin oxide), etc.; or a metal halide such as magnesium fluoride, calcium fluoride, sodium fluoride, lanthanum fluoride, cerium fluoride, lithium fluoride, thorium fluoride, etc.

The inorganic substrate or inorganic compound layer formed of any of these inorganic compounds may be of a single layer or a multi-layer. The inorganic compound layer functions as a reflection preventive layer and can be formed by making use of any conventional method such as a wet coating method, a PVD (Physical Vapor Deposition) method and a CVD (Chemical Vapor Deposition) method. The wet coating method may be a dip coating method, a spin coating method, a flow coating method, a spray coating method, a roll coating method, a gravure coating method, etc. As for the PVD method, it is possible to employ a vacuum deposition method, a reactive vapor deposition method, an ion beam assist method, a sputtering method, an ion plating method, etc.

As for the transparent plastic substrate which is one example of an organic substrate to be employed as a treating substrate, various kinds of organic polymer substrates may be employed. The materials to be employed as an optical member are generally required to be excellent not only in optical properties such as transparency, refractive index and dispersivity, but also in other physical properties such as shock resistance, heat resistance and durability. In view of these requirements, a polyolefin resin (polyethylene, polypropylene, etc.), a polyester resin (polyethylene terephthalate, polyethylene naphthalate, etc.), a polyamide resin (nylon-6, nylon-66, etc.), polystyrene, polyvinyl chloride, polyimide, polyvinyl alcohol, ethylene vinyl alcohol, acrylic resin, cellulose (triacetyl cellulose, diacetyl cellulose, cellophane, etc.), or a copolymer of these organic polymer may be employed. Therefore, these polymer can be employed also in this invention as a transparent plastic substrate for constituting the treating substrate.

It is also possible to incorporate various kinds of conventional additives such as an anti-static agent, an ultraviolet absorbent, a plasticizer, a lubricant, a colorant, an antioxidant, a flame retardant, etc. into the organic polymer constituting these organic substrates.

An inorganic compound layer may be superimposed on these organic substrates to be employed as the treating substrate in this invention. In this case, the inorganic compound layer functions as a reflection preventive layer, and can be deposited on the surface of the organic substrates in the same manner as explained above.

There is not any particular limitation regarding the shape of the inorganic substrate or organic substrate to be employed as the treating substrate. The transparent plastic substrate to be employed as an optical member is generally provided in the form of film or sheet, and hence, a film-like or sheet-like transparent plastic substrate can be employed in this invention also. This film-like or sheet-like transparent plastic substrate may be formed of a single layer or of a laminate layer consisting of plural organic polymer layers. Although there is not any particular limitation regarding the thickness of the transparent plastic substrate, the thickness should preferably be in the range of 0.01 to 5 mm.

It is also possible to interpose a hard coat layer between the transparent plastic substrate and the inorganic compound layer. The provision of this hard coat layer is effective in improving not only the hardness of the substrate surface but also the adhesivity between the transparent plastic substrate and the inorganic compound layer, since the flatness of the substrate surface can be improved by this hard coat layer. Therefore, any scratch that may be caused by the pressing of pencil, etc. on the substrate surface can be effectively prevented. Moreover, the generation of cracks of the inorganic compound layer due to the bending of the transparent plastic substrate can be effectively prevented, thus making it possible to improve the mechanical strength of the optical member.

There is not any particular limitation with regard to the material of the hard coat layer as long as the hard coat layer is excellent in transparency, sufficient in hardness and excellent in mechanical strength. For example, a cured resin which can be cured by the irradiation of an ionizing radiation or ultraviolet ray, or a thermosetting resin can be employed. In particular, an ultraviolet irradiation-curing type acrylic resin, an organic silicone resin and a thermosetting type polysiloxane resin are preferable for forming the hard coat layer. It is more preferable that the refractive index of these resins is the same or nearly the same as that of the transparent plastic substrate.

There is not any particular limitation with regard to the method of coating the hard coat layer as long as it is capable of forming a uniform layer. The thickness of the hard coat layer may be sufficient if it is 3 *µ*m or more for ensuring a sufficient strength. In view of the transparency, coating precision and handling thereof however, a preferable range in thickness of the hard coat layer is 5 to 7 *µ*m.

It is also possible to mix and disperse an inorganic or organic fine particle having an average particle diameter of 0.01 to 3 *µ*m into the hard coat layer, thereby achieving a light dispersion treatment or so-called anti-glare treatment. Although there is not any particular limitation regarding this inorganic or organic fine particle as long as the fine particle is transparent, it is more preferable to employ a material of low refractive index. Specifically, silicon oxide and magnesium fluoride is especially preferable in view of the stability and heat resistance thereof. The aforementioned light dispersion treatment can be realized also by roughening the surface of the hard coat layer.

The aforementioned treating substrate can be employed as a transparent substrate for the reflection preventive member in this invention. In particular, the treating substrate provided on its surface with a reflection preventive film can be treated in this invention as a transparent substrate provided with a reflection preventive film. The reflection preventive optical member according to this invention can be obtained by depositing an anti-smudge layer on the surface of the aforementioned resultant transparent substrate.

As for the method of forming the anti-smudge layer, there is not any particular limitation, and hence it is possible to adopt either a wet coating method or a dry coating method.

This wet coating method may be a dip coating method, a spin coating method, a flow coating method, a spray coating method, a roll coating method, a gravure coating method, etc.

On the other hand, the dry coating method may be for instance a vacuum deposition method, a sputtering method or a CVD method. More specifically, the vacuum deposition method may be performed by way of a resistance heating method, an electron beam method, a high frequency heating method, an ion beam method, etc. The CVD method can be performed by way of a plasma CVD method, a light CVD method, a thermal CVD method, etc.

Although there is not any particular limitation regarding a diluent solvent to be employed in the wet coating method, it is preferable to employ a perfluoroaliphatic hydrocarbon having 5 to 12 carbon atoms such as perfluorohexane, perfluoromethylcyclohexane, perfluoro-1,3-dimethylcyclohexane; an aromatic hydrocarbon polyfluoride such as bis(trifluoromethyl) benzene; and an aliphatic hydrocarbon polyfluoride. These solvents may be employed singly or as a mixture containing two or more kinds of these solvents.

The employment of this wet coating method is preferable where the treating substrate is of complicated configuration or large in surface area.

On the other hand, the employment of dry coating method which can be dispensed with the employment of a diluent solvent is preferable in view of the working environment at the occasion of forming an anti-smudge layer or in view of controlling the film thickness of an anti-smudge layer. In that respect, the employment of a vacuum deposition method is most preferable. It is possible according to a dry coating method to precisely control the film thickness of the anti-smudge layer to the order of angstrom which the prior art has failed to achieve so far. As a result, it is now possible to provide an optical member having a desired anti-smudge layer. Further, it is now possible to easily provide an optical member having a reflection preventive film with an anti-smudge property without causing any change in interference color of the reflection preventive film where the color is difficult to set.

.By the way, in the case where an anti-smudge layer is to be formed by means of a dry coating method, the film thickness to be formed changes depending on the quantity of evaporation of the anti-smudge agent. Therefore, if the film thickness of an anti-smudge layer is to be precisely controlled, the quantity of the evaporation of the anti-smudge agent should preferably be controlled precisely.

After finishing the deposition of an anti-smudge layer on a treating substrate by means of a dry coating method or a wet coating method, the anti-smudge layer may be subjected, if desired, to heating, humidification, light irradiation, electron beam irradiation, etc.

In particular, it is also preferable to form an anti-smudge layer by means of vacuum deposition method using a porous molded body.

Namely, this vacuum deposition method comprises the steps of; impregnating a porous molded body with an anti-smudge agent of this invention; and heating the porous molded body impregnated with the anti-smudge agent in vacuum so as to evaporate the anti-smudge agent and to deposit an anti-smudge layer on a transparent substrate covered in advance with a reflection preventive film.

As for the components constituting the porous molded body (pellet)to be employed in this method, it is possible to employ SiO₂, TiO₂, ZrO₂, MgO, Al₂O₃, CaSO₄, Cu, Fe, Al, stainless steel, carbon or a mixture thereof. Generally, these materials should be pulverized to have a particle diameter in the range of 5 to 20 *µ*m. These pulverized materials are then pelletized and sintered according to the conventional method thereby obtaining a porous molded body to be employed in this invention.

The sintering step of the pellet is generally performed at a temperature of 700 to 1,400°C for 1 to 10 hours. Depending on the particle diameter of the primary particle, density and sintering conditions, a porous molded body having a varied degree of porosity ranging from 30 to 60% can be obtained.

The anti-smudge agent of this invention is dissolved in a solvent such as perfluorohexane to obtain a solution, into which the porous molded body (pellet) is dipped so as to completely saturate the porous molded body with the anti-smudge agent. Thereafter, the solvent is allowed to evaporate, thus obtaining a porous molded body impregnated with the anti-smudge agent of this invention.

Then, by making use of this porous molded body impregnated with the anti-smudge agent, an anti-smudge layer is deposited on the surface of a treating substrate by means of a vacuum deposition method. As for the heating method for heating the porous molded body thereby to evaporate the anti-smudge agent, a resistance heating method, an electron beam heating method, ion beam heating method, high frequency heating method or a light heating method can be effectively employed.

After finishing the deposition of an anti-smudge layer on the treating substrate, the resultant substrate may be subjected, if desired, to heating, humidification, light irradiation, electron beam irradiation.

As explained above, if an anti-smudge layer is to be formed by means of a dry coating method, the quantity of the evaporation of the anti-smudge agent should preferably be controlled precisely in order to precisely control the film thickness of the anti-smudge layer. When the aforementioned porous molded body is employed, the evaporation quantity of the anti-smudge agent is determined by the impregnated quantity of the anti-smudge agent in the porous molded body and by the heating conditions at the occasion of forming the anti-smudge layer, and hence the employment of the porous molded body is advantageous in terms of controlling the film thickness. The employment of the porous molded body for forming an anti-smudge layer by means of a vacuum deposition method is also advantageous in the respects that preventing leaked anti-smudge agent due to heating from contaminate the inner portion of the apparatus and in the respects that decreasing the splash phenomenon of the anti-smudge agent.

Although there is not any particular limitation with respect to the film thickness of the anti-smudge layer to be formed using an anti-smudge agent of this invention, the film thickness should preferably be in the range of 10 to 500 angstroms in view of anti-smudge property, abrasion resistance and optical performance of an optical member.

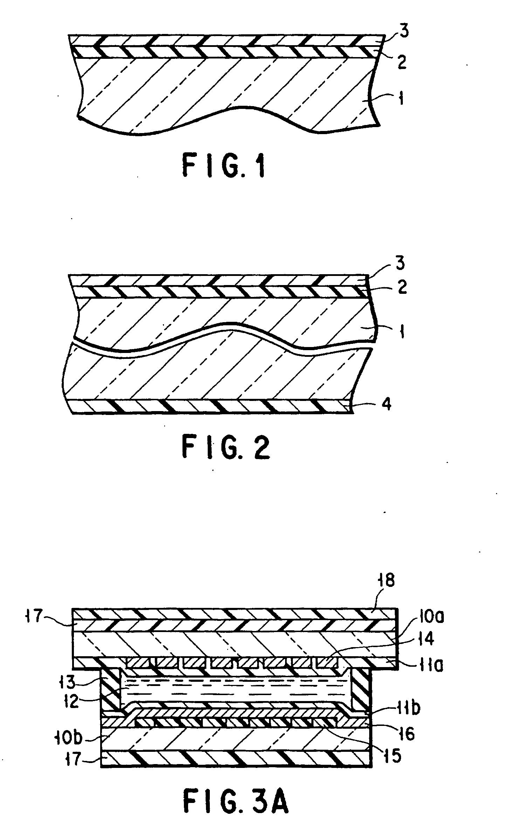

FIG. 1 shows a cross-sectional view of one example of the reflection preventive optical member according to this invention.

Referring to FIG. 1, a reflection preventive film 2 is deposited on one of the surfaces of a transparent substrate 1. Further, an anti-smudge layer 3 is formed on this reflection preventive film 2 according to the method of this invention.

This reflection preventive optical member according to this invention is then adhered to a functional optical member such as a polarizing plate by a suitable bonding method such as lamination thereby to obtain an optical functional member of this invention exhibiting a reflection preventive function.

FIG. 2 shows a cross-sectional view of one example of the optical functional member according to this invention.

Referring to FIG. 2, a reflection preventive film 2 is deposited on one of the surfaces of a transparent substrate 1. Further, an anti-smudge layer 3 is formed on this reflection preventive film 2 according to the method of this invention. Further, a polarizing plate 4 acting as a functional optical member is formed on the other surface of the transparent substrate 1.

This reflection preventive optical member or an optical functional member laminated with this reflection preventive optical member is then adhered, by making use of an adhesive or a pressure-sensitive adhesive, onto the front face plate (a glass plate, a plastic plate or a polarizing plate) of various display devices (a liquid crystal display, a CRT display, a projection television, a plasma display, an EL display, etc.) thereby to obtain a display device of this invention.

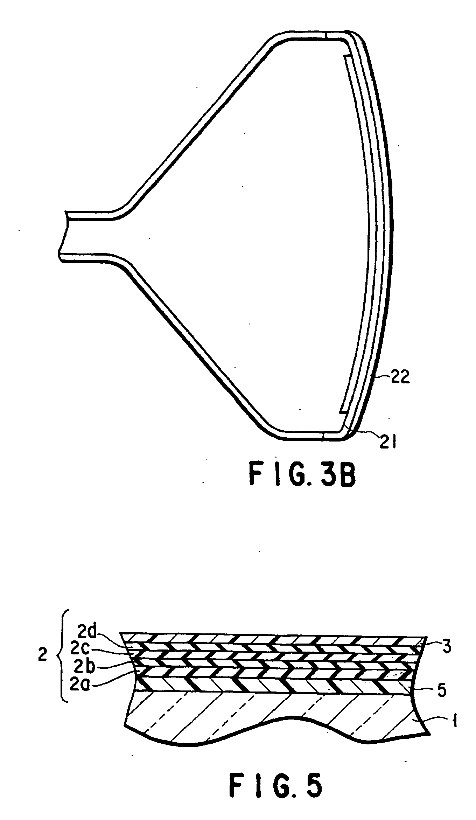

FIG. 3 shows a schematical view of one example of the display device according to this invention. In the liquid crystal display shown in FIG. 3A, a TFT substrate 10a provided on one surface thereof with an alignment film 11a is disposed to face a glass substrate 10b provided on one surface thereof with an alignment film 11b with a spacer 13 being interposed therebetween. Additionally, a liquid crystal layer 12 is kept sustained between the TFT substrate 10a and the glass substrate 10b. Further, the TFT substrate 10a is provided with a display electrode 14, and the glass substrate 10b is provided with a color filter 15 and a counter electrode 16. Further, a polarizing plate 17 is formed on the other surface of each of the TFT substrate 10a and the glass substrate 10b.

An optical functional member 18 provided with an anti-smudge layer which has been formed using an anti-smudge agent of this invention is formed on the surface of the polarizing plate 17 formed on the TFT substrate 10a.

FIG. 3B shows a schematical view of a portion of a CRT display. As shown in FIG. 3B, an optical functional member 22 provided with an anti-smudge layer which has been formed using an anti-smudge agent of this invention is formed on the surface of a panel 21.

As shown in these FIGS. 3A and 3B, an anti-smudge layer is formed on the surface of an optical functional member so as to prevent a smudge such as fingerprints, skin fat, sweat, cosmetics, etc. from adhering onto the surface of an optical functional member. This anti-smudge layer is excellent in durability and capable of easily wiping off a smudge even if the smudge is adhered onto the surface of the anti-smudge layer. Therefore, it is possible to obtain a display device which is excellent in image recognizability.

Next, this invention will be further explained with reference to specific examples, which are not intended to limit this invention.

First of all, a reflection preventive film-attached TAC (triacetyl cellulose)film was prepared as follows.

A monofunctional acrylic resin was coated on the surface of a TAC film (thickness: 80 *µ*m) by means of a microgravure method. Then, the light from a metahalide lamp (120W) was irradiated to the coated layer from a distance of 20 cm for 10 seconds, thereby forming a hard coat layer. Thereafter, a first TiO₂ film, a first SiO₂ film, a second TiO₂ film and a second SiO₂ film successively deposited on the hard coat layer by means of a plasma assist deposition method, thereby obtaining a reflection preventive layer.

The refractive index "n", geometrical thickness "d" and optical film thickness "nd" of each layer were set to: the TAC film (n=1.49), the hard coat layer (n=1.51, d=about 5 *µ*m), the first TiO₂ film (n=2.30, nd=60 nm), the first SiO₂ film (n=1.46, nd=40 nm), the second TiO₂ film (n=2.30, nd=110 nm) and the second SiO₂ film (n=1.46, nd=140 nm). The optical film thickness was watched by making use of an optical film thickness monitor, and when an aimed quantity of light was reached, the operation of forming the film was stopped thereby to obtain a predetermined optical film thickness.

In the following Examples and Comparative Examples, the reflection preventive film-attached TAC films obtained in this manner were employed as a treating substrate or as a transparent substrate for forming an anti-smudge layer.

### Example 1

First of all, 1.70g of a fluorine resin having hydroxyl group and represented by the following chemical formula (4) was dissolved in 7.13g of bis(trifluoromethyl) benzene to prepare a solution. The resultant solution was then placed in a four-necked flask provided with a stirrer, a dropping funnel, a reflux condenser and a thermometer.

C₃F₇-(OC₃F₆)₂₄-O-(CF₂)₂-CH₂OH (4)

Then, 0.0018g of dibutyltin dilaurate (catalyst) was added to the solution in the flask, and the resultant mixture was then kept at a temperature of 100°C with sufficient stirring. Thereafter, 0.13g of isocyanate propyltriethoxy silane represented by the following chemical formula (5) was dropped from the dropping funnel into the flask.

OCN(CH₂)₃-Si-(OC₂H₅)₃ (5)

After finishing the dropping of the silane compound, the mixture was allowed to react while being heated at reflux for 10 hours, thereby obtaining an organosilicon compound.

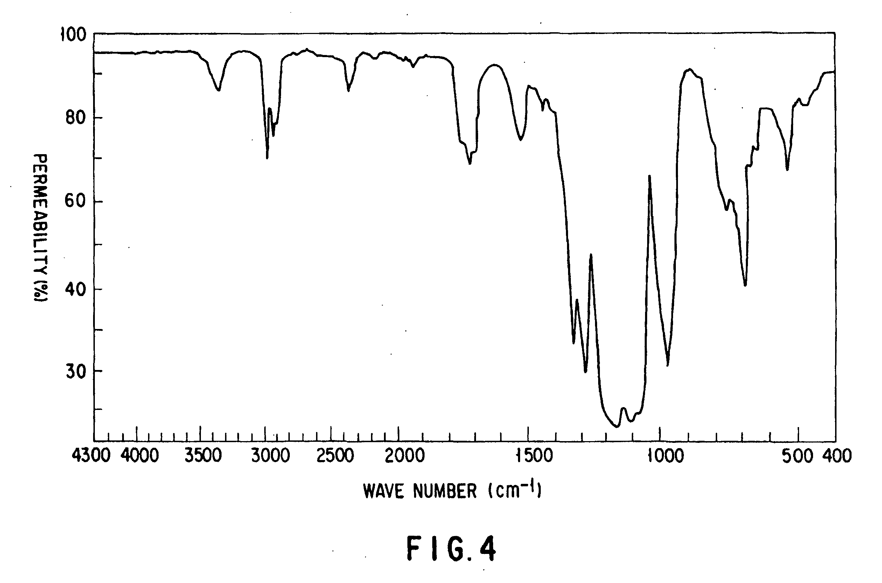

Then, this organosilicon compound was subjected to an FT-IR analysis to obtain an FT-IR chart as shown in FIG. 4.

. As a result, the compound obtained was confirmed as being an organosilicon compound represented by the following chemical formula (6).

C₃F₇(OC₃F₆)₂₄-O-(CF₂)₂-CH₂-OOCNH(CH₂)₃-Si-(OC₂H₅)₃ (6)

The organosilicon compound thus obtained was diluted with perfluorohexane to a 0.1 wt% solution thereby obtaining an anti-smudge agent of this invention.

Then, the reflection preventive film-attached TAC film prepared as mentioned above was employed as a treating substrate, and the anti-smudge agent obtained in this example was coated on the surface of the treating substrate by means of a dip coating method. The coated substrate was then heat-dried at a temperature of 60°C for one minute thereby to form an anti-smudge layer, thereby obtaining a reflection preventive optical member of this example

FIG. 5 shows a cross-sectional view of the reflection preventive optical member obtained in this manner. As shown in FIG. 5, the reflection preventive optical member according to this example was constructed such that a hard coat layer 5 was formed on a transparent substrate 1, and a reflection preventive film 2 formed of a laminate structure consisting of a first TiO₂ film 2a, a first SiO₂ film 2b, a second TiO₂ film 2c and a second SiO₂ film 2d was deposited on the surface of hard coat layer 5. The uppermost layer of this optical member was constituted by an anti-smudge layer 3 formed from the anti-smudge agent of this invention.

### Comparative Example 1

CF₃(CF₂)₇(CH₂)₂Si(NH₃)₂ (KP801M; Shin-etsu Chemical Industries Ltd.) was diluted with perfluorohexane to a 0.1 wt% solution thereby obtaining an anti-smudge agent.

Then, by making use of this anti-smudge agent, an anti-smudge layer was formed on the surface of a treating substrate in the same manner as illustrated in Example 1.

### Example 2

The organosilicon compound obtained in Example 1 and represented by the chemical formula (6) was diluted with perfluorohexane to a 20 wt% solution thereby obtaining an anti-smudge agent of this example.

Then, the reflection preventive film-attached TAC film prepared as mentioned above was employed as a treating substrate, and the anti-smudge agent obtained in this example was deposited on the surface of the treating substrate by means of a vacuum deposition method (resistance heating method), thereby forming an anti-smudge layer.

In the practice of this vacuum deposition method, 5 mg (solid matter) of the anti-smudge agent was placed inside a boat, and the interior of the deposition apparatus was evacuated to a vacuum degree of 5 x 10⁻⁵ torr or less. Thereafter, the boat was heated to 400°C so as to evaporate the anti-smudge agent.

### Comparative Example 2

The same procedures as those of Example 2 were repeated except that CF₃(CF₂)₇(CH₂)₂Si(NH)_{3/2} (KP801M; Shin-etsu Chemical Industries Ltd.) was employed as an anti-smudge agent, thereby forming an anti-smudge layer on the surface of a treating substrate.

### Example 3

### (1) Manufacture of porous molded body

A pellet having a diameter of 6 mm and a height of 4 mm was manufactured by means of hydraulic press and by making use of Al₂O₃ powder having a particle diameter of 1 to 10 *µ*m as a raw material. Then, this pellet was sintered at a temperature of 1,200°C for 14 hours. The resultant sintered substance (pellet) was found as having a porosity of about 40%.

### (2) Synthesis of an anti-smudge agent

First of all, sodium hydride oil suspension was placed in a 100 mL two-necked eggplant type flask provided with a dropping funnel and a reflux condenser thereby to perform nitrogen displacement. After this displacement, the washing with n-hexane under nitrogen gas atmosphere was repeated four times, and then n-hexane was distilled in vacuum thereby to obtain sodium hydride (0.011 mol).

0.01 mol of a fluorine resin having hydroxyl group and represented by the following chemical formula (4) was dissolved in 50g of bis(trifluoromethyl) benzene to prepare a solution. The resultant solution was then gently dropped under ice-cooling into the flask at a rate of one drop per second. After finishing this dropping operation, the reaction mixture was taken out of the ice bath and stirred for 10 hours at room temperature. 0.1 mol of chloromethyltrimethoxy silane represented by the following formula (7) was added to sodium alkoxide and the resultant mixture was stirred for two hours at room temperature. Thereafter, the reaction mixture was heated at reflux for 72 hours while maintaining the heating temperature at 90°C. After finishing the reflux, unreacted sodium hydride and sodium chloride were filtered out under vacuum, and filtrate was water-washed sufficiently. Further, bis(trifluoromethyl) benzene and an excessive chloromethyltrimethoxy silane were distilled in vacuum thereby to obtain an organosilicon compound represented by the following formula (8).

C₃F₇-(OC₃F₆)₂₄-O-(CF₂)₂-CH₂-OH (4)

ClCH₂Si(OCH₃)₃ (7)

C₃F₇-(OC₃F₆)₂₄-O-(CF₂)₂-CH₂-O-CH₂Si(OCH₃)₃ (8)

Then, 5g of the organosilicon compound represented by the aforementioned formula (8) was diluted with perfluorohexane to a 10 wt% solution thereby obtaining an anti-smudge agent. Then, the aforementioned porous molded body (pellet) was dipped into the anti-smudge agent solution so as to completely saturate the porous molded body with the anti-smudge agent. Subsequently, the porous molded body was taken out of the anti-smudge agent solution, and the solvent was allowed to evaporate. As a result, the porous molded body (pellet) was found as containing about 2 wt% of the anti-smudge agent.

### (3) Formation of an anti-smudge layer

The pellet was mounted on a molybdenum boat, and the anti-smudge agent was allowed to deposit on the aforementioned reflection preventive film-attached TAC film by means of a vacuum deposition method (resistance heating method) thereby to form an anti-smudge layer. In this case, the interior of the deposition apparatus was evacuated to a vacuum degree of 5 × 10⁻⁵ torr or less. Thereafter, the boat was heated to 400°C so as to evaporate the anti-smudge agent.

### Comparative Example 3

The same procedures as those of Example 3 were repeated except that CF₃(CF₂)7(CH₂)₂Si(NH)_{3/2} (KP801M; Shin-etsu Chemical Industries Ltd.) was employed as an anti-smudge agent, thereby forming an anti-smudge layer on the surface of the reflection preventive film-attached TAC film.

### Example 4

### (1) Manufacture of porous molded body

A pellet having a porosity of about 40% was prepared in the same procedures as those of Example 3.

### (2) Synthesis of an anti-smudge agent

First of all, sodium hydride oil suspension was placed in a 100 mL two-necked eggplant type flask provided with a dropping funnel and a reflux condenser thereby to perform nitrogen displacement. After this displacement, the washing with n-hexane under nitrogen gas atmosphere was repeated four times, and then n-hexane was distilled in vacuum thereby to obtain sodium hydride (0.011 mol).

0.01 mol of a fluorine resin having hydroxyl group and represented by the following chemical formula (4) was dissolved in 50g of bis(trifluoromethyl) benzene to prepare a solution. The resultant solution was then gently dropped under ice-cooling into the flask at a rate of one drop per second. After finishing this dropping operation, the reaction mixture was taken out of the ice bath and stirred for 10 hours at room temperature. 0.03 mol of chloromethyltrimethoxy silane represented by the following formula (7) was added to sodium alkoxide and the resultant mixture was stirred for two hours at room temperature. Thereafter, the reaction mixture was heated at reflux for 48 hours while maintaining the heating temperature at 100°C. After finishing the reflux, unreacted sodium hydride and sodium chloride were filtered out under vacuum, and filtrate was water-washed sufficiently. Further, bis(trifluoromethyl) benzene and an excessive chloromethyltrimethoxy silane were distilled in vacuum thereby to obtain an organosilicon compound represented by the following formula (9).

C₃F₇-(OC₃F₆)₂₄-O-(CF₂)₂-CH₂-OH (4)

ClCH₂Si(OCH₃)₃ (7)

[C₃F₇-(OC₃F₆)₂₄-O-(CF₂)₂-CH₂-O-CH₂]Si(OCH₃)₂[(CH₂)₂Cl] (9)

Then, 5g of the organosilicon compound represented by the aforementioned formula (9) was diluted with perfluorohexane to a 10 wt% solution thereby obtaining an anti-smudge agent. Then, the aforementioned porous molded body (pellet) was dipped into the anti-smudge agent solution so as to completely saturate the porous molded body with the anti-smudge agent. Subsequently, the porous molded body was taken out of the anti-smudge agent solution, and the solvent was allowed to evaporate. As a result, the porous molded body (pellet) was found as containing about 2 wt% of the anti-smudge agent.

### (3) Formation of an anti-smudge layer

By making use of the same procedures as those of Example 3, an anti-smudge layer was formed on the surface of the reflection preventive film-attached TAC film.

The anti-smudge layers obtained in the above Examples and Comparative Examples were employed as samples for evaluating the following various properties. The results obtained are summarized in the following Table 1.
(a) The measurement of contact angle: By making use of a contact angle gauge (CA-X: Kyowa Kaimen Kagaku Co. Ltd.), a droplet having a diameter of 1.8 mm was prepared at tip end of needle under a dry condition (20°c, 65%RH). Then, this droplet was contacted with the surface of a sample (solid body) so as to form a droplet on the surface of the sample. This contact angle is an angle formed between the surface of a solid body and the tangent line to the surface of the liquid at the contact point between the solid and the liquid. Therefore, the contact angle was defined as being an angle as measured from the contacting bottom of the liquid. As for the liquid, a distilled water and n-hexadecane were employed.
(b) The measurement of falling angle: By making use of a dropping angle gauge (CA-X: Kyowa Kaimen Kagaku Co. Ltd.), a droplet having a diameter of 3.0 mm was prepared at tip end of needle under a dry condition (20°C, 65%RH). Then, this droplet was contacted with the surface of a horizontal sample (solid body) so as to form a droplet on the surface of a horizontal sample. When this solid sample was gradually inclined, the droplet was caused to gradually deform, and when the sample was inclined to a certain angle, the droplet was caused to run downward. Therefore, this final inclined angle was defined as a falling angle. As for the liquid, a distilled water and n-hexadecane were employed.
(c) The adhesivity of an oil pen: By making use of an oil pen (a marker ink: lean type No.500), a straight line 1 cm in length was written on the surface of a sample so as to determine with naked eyes the easiness of adhesion and the stand-out degree of written portion. The criterion in this case was defined as follows.
   ○: The written portion by the oil pen was spherically repelled;
   ×: The written portion by the oil pen was not repelled and the straight line could be written;
(d) Easiness in wiping off of an oil ink: The oil ink that was adhered on the surface of a sample was wiped off using a cellulose nonwoven fabric (Pencot M-3; Asahi Kasei Co., Ltd.) so as to determine with naked eyes the easiness of removing it. The criterion in this case was defined as follows.
   ○: The oil ink could be completely wiped off;
   Δ: It was possible to recognize a trace of oil ink after the wipe-off;
   ×: It was impossible to wipe off the oil ink;
(e) The adhesivity of finger prints: A finger was pressed on the surface of a sample for several second thereby to adhere a fingerprint on the surface of a sample so as to determine with naked eyes the easiness of adhesion and the stand-out degree of finger print. The criterion in this case was defined as follows.
   ○: The adhesion of finger print was minimal and the trace of the finger print did not stand out;
   ×: The adhesion of finger print could be recognized;
(f) Easiness in wiping off of finger prints: A finger print that was adhered on the surface of a sample was wiped off using a cellulose nonwoven fabric (Pencot M-3; Asahi Kasei Co., Ltd.) so as to determine with naked eyes the easiness of removing it. The criterion in this case was defined as follows.
   ○: The finger print could be completely wiped off;
   Δ: It was possible to recognize a trace of finger print after the wipe-off;
   ×: It was impossible to wipe off the finger print;
(g) Abrasion resistance: The surface of a sample was rubbed 100 times while applying a load of 500gf by making use of a cellulose nonwoven fabric (Pencot M-3; Asahi Kasei Co., Ltd.), after which the aforementioned evaluations of properties (a) to (f) were performed again.

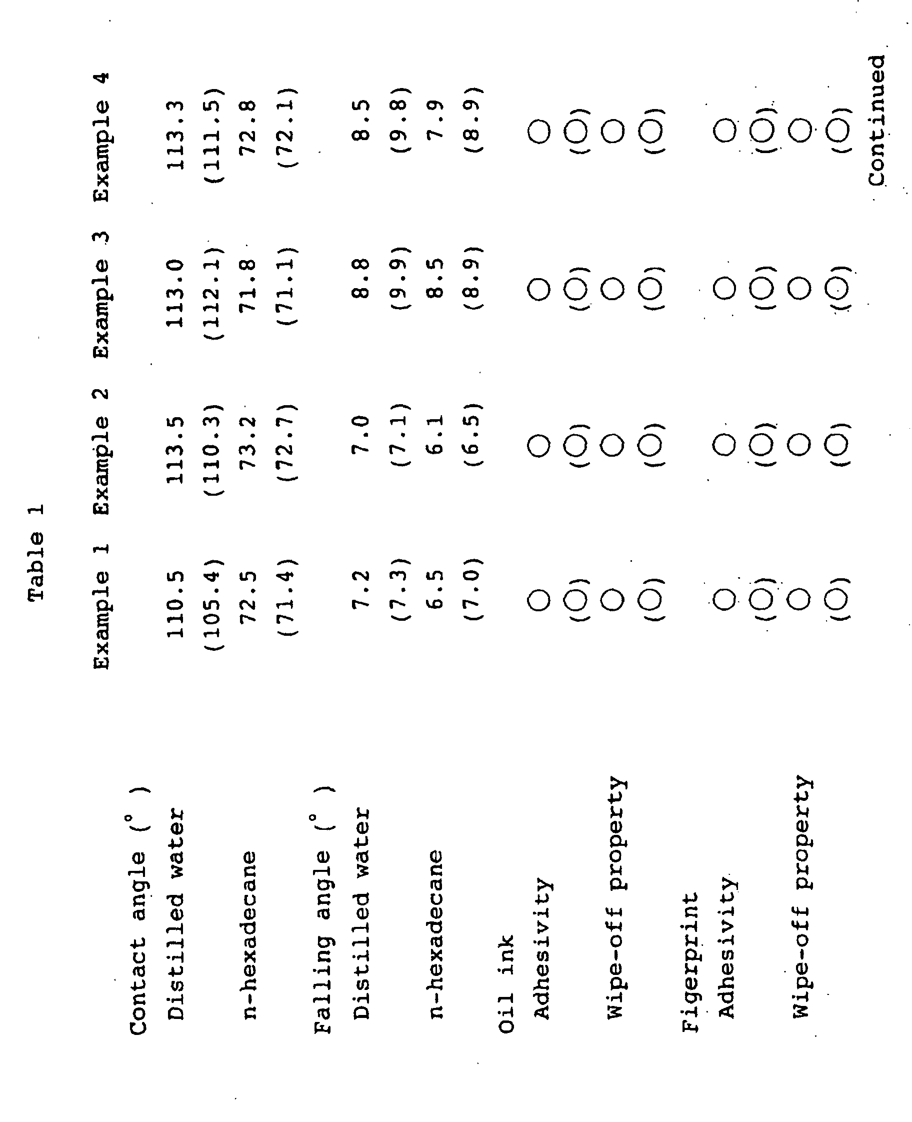

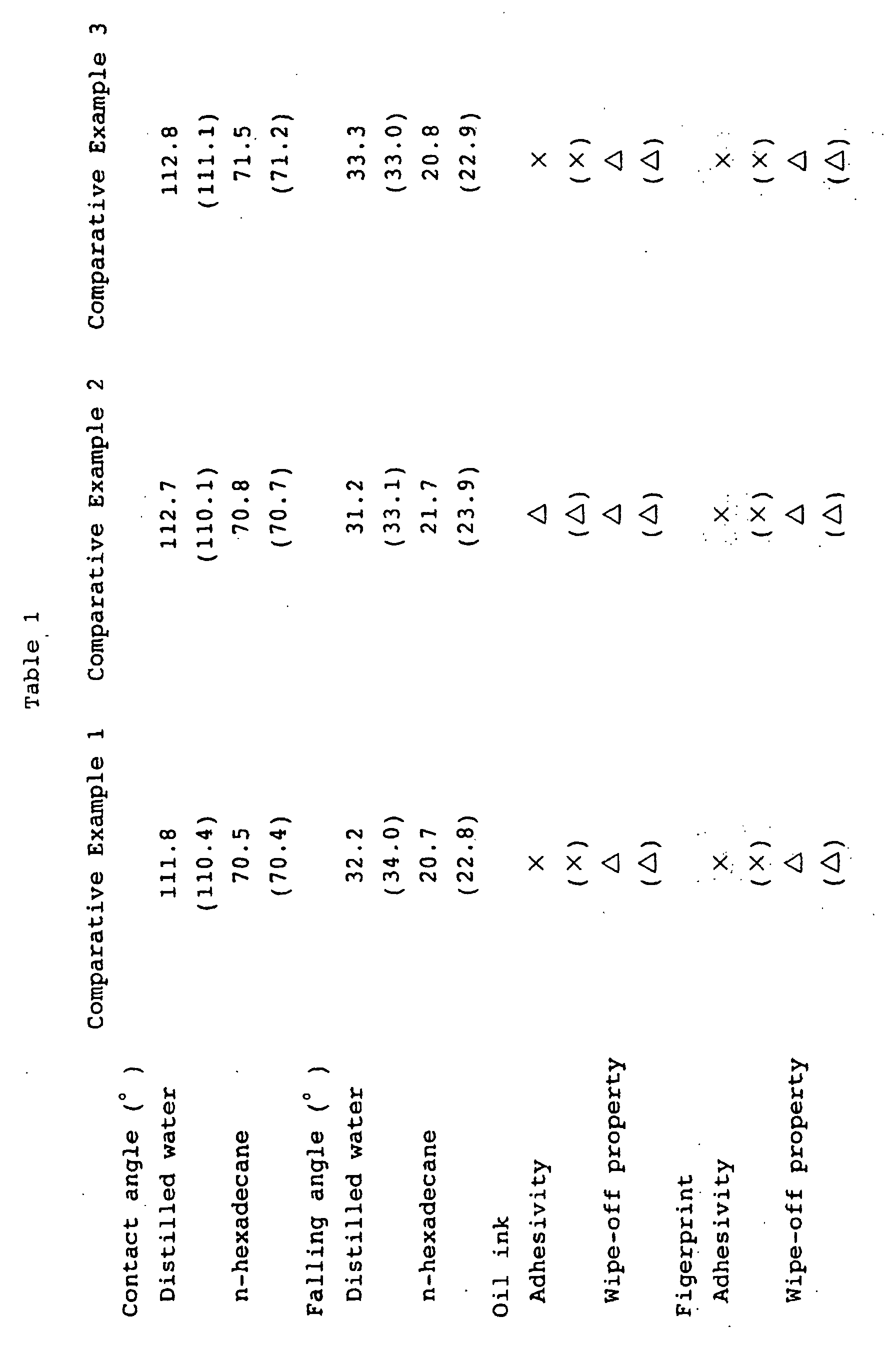

The values in the parenthesis denote the results after the abrasion resistance test.

It will be seen from Table 1 that the anti-smudge layers according to Examples 1 to 4 were less wettable to distilled water and n-hexane and less adhesive to finger print and oily soil as compared with Comparative Examples 1 to 3. Moreover, even if a smudge was adhered to the anti-smudge layers according to Examples 1 to 4, the smudge could be easily removed, thus indicating an excellent anti-smudge property. Further, as shown in Table 1, the anti-smudge property of the samples of these Examples were found durable after the abrasion resistance test, thus indicating excellent durability of their anti-smudge property.

The anti-smudge layer formed on the surface of an optical member by making use of an anti-smudge agent of this invention is capable of more effectively preventing smudges formed of fingerprints, skin fat, sweat, cosmetics, etc. from being adhered onto the surface thereof without deteriorating the optical properties of the optical member as compared with the anti-smudge layer formed by making use of the conventional anti-smudge agents, and even if a smudge is adhered to the anti-smudge layer, the smudge can be easily removed, and at the same time, the durability of anti-smudge property of the anti-smudge layer of this invention is excellent.

Additionally, when an anti-smudge layer is to be formed by means of a wet coating method using an anti-smudge agent of this invention, it becomes possible to apply it to a treating substrate of complicated configuration and of large surface area, which the conventional dry coating method has failed to apply. On the other hand, when an anti-smudge layer is to be formed by means of a dry coating method using an anti-smudge agent of this invention, the employment of a diluent solvent for the formation of an anti-smudge layer can be dispensed with, and at the same time, it becomes possible to precisely control the film thickness of the anti-smudge layer. In particular, when a vacuum deposition method is employed by making use of a porous molded body for the formation of an anti-smudge layer, the controlling of film thickness would become more easy, thus being advantageous in the formation of the anti-smudge layer.

Since the optical functional member of this invention that can be obtained by the lamination of an optical member or a reflection preventive optical member of this invention with a functional optical member such as a polarizing plate is provided on the surface thereof with an anti-smudge layer which is excellent in anti-smudge property as well as in durability, it is possible to obtain a display device which is excellent in image recognizability, if this optical functional member is attached to the front face of display screen of various display devices (such as a liquid crystal display, a CRT display, a projection television, a plasma display, an EL display, etc.).

## Claims

1. An anti-smudge agent **characterized by** containing an organosilicon compound represented by the following general formula (1):
R^{f2}-(OC₃F₆)ₙ₂O-(CF₂)ₘ₂-(CH₂)₁₂-Z-(CH₂)ₛ₂-Si-(R²)₃ (1)
wherein R^{f2} is a linear or branched perfluoroalkyl group having 1 to 16 carbon atoms; R² is a hydrolytic group; Z is -OOCNH- or -O-; n2 is an integer of 1 to 50; m2 is an integer of 0 to 3; 12 is an integer of 0 to 3; and s2 is an integer of 1 to 6, with the proviso that these m2 and 12 meet the condition of 6≥m2+12>0.

2. The anti-smudge agent according to claim 1, **characterized in that** said R² in said general formula (1) is an alkoxy group having 1 to 10 carbon atoms.

3. An anti-smudge agent **characterized by** containing an organosilicon compound represented by the following general formula (3): 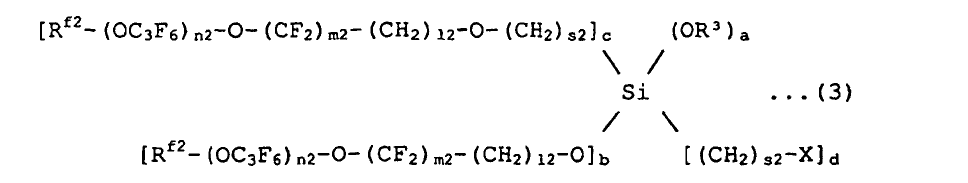 wherein R^{f2} is a linear or branched perfluoroalkyl group having 1 to 16 carbon atoms; R³ is an alkyl group having 1 to 10 carbon atoms; X is a halogen atom; n2 is an integer of 1 to 50; m2 is an integer of 0 to 3; 12 is an integer of 0 to 3; and s2 is an integer of 1 to 6; a is an integer of 0 to 3; b is an integer of 0 to 3; c is 0 or 1; d is 0 or 1; with the proviso that these m2, 12, a, b, c and d meet the conditions of 6≥m2+12>0, a+b=3, and c+d=1.

4. The anti-smudge agent according to claim 3 **characterized in that** said organosilicon compound is formed of a first organosilicon compound represented by said general formula (3) and a second organosilicon compound represented by said general formula (3), and said first organosilicon compound and said second organosilicon compound are different from each other in the components "a", "b", "c" and "d" in said general formula (3).

5. A method of forming an anti-smudge layer **characterized by** comprising a step of depositing the anti-smudge agent according to any of claims 1 to 4 on a treating substrate.

6. The method of forming an anti-smudge layer according to claim 5 **characterized by** depositing the anti-smudge agent on a treating substrate by means of a wet coating method.

7. The method of forming an anti-smudge layer according to claim 5 **characterized by** depositing the anti-smudge agent on a treating substrate by means of a dry coating method.

8. The method of forming an anti-smudge layer according any of claims 5 to 7, further comprising a step of subjecting said anti-smudge layer that has been formed on the treating substrate by making use of said anti-smudge agent to heating, humidification, light irradiation, or electron beam irradiation.

9. A method of forming an anti-smudge layer **characterized by** comprising the steps of:
impregnating a porous molded body with the anti-smudge agent according to any of claims 1 to 4; and
heating said porous molded body impregnated with said anti-smudge agent in vacuum thereby to evaporate said anti-smudge agent and to form an anti-smudge layer on a treating substrate.

10. The method of forming an anti-smudge layer according to claim 9, further comprising a step of subjecting said anti-smudge layer that has been formed on the treating substrate by making use of said anti-smudge agent to heating, humidification, light irradiation, or electron beam irradiation.

11. The method of forming an anti-smudge layer according to claim 9, **characterized in that** said porous molded body is constituted by at least one kind of materials selected from the group consisting of SiO₂, TiO₂, ZrO₂, MgO, Al₂O₃, CaSO₄ , Cu, Fe, Al, stainless steel and carbon.

12. The method of forming an anti-smudge layer according to claim 9, **characterized in that** the heating method for evaporating said anti-smudge agent impregnated in said porous molded body is at least one method selected from a resistance heating method, an electron beam heating method, ion beam heating method, high frequency heating method and a light heating method.

13. A reflection preventive optical member comprising a transparent substrate; a reflection preventive film formed on at least one surface of said transparent substrate; and an anti-smudge layer formed on an outermost surface; **characterized in that** said anti-smudge layer contains the anti-smudge agent of any one of claims 1to 4.

14. The reflection preventive optical member according to claim 13, **characterized in that** said transparent substrate is an organic substrate formed of a transparent substrate or an inorganic substrate formed of a glass substrate.

15. An optical functional member **characterized by** comprising the reflection preventive optical member of claim 13 and a functional optical member adhered to said reflection preventive optical member.

16. The optical functional member according to claim 15, **characterized in that** said functional optical member is a polarizing plate.

17. A display device comprising a display screen having front face, on the surface of which a coat member is adhered via an adhesive, **characterized in that** said coat member is the optical functional member of claim 15 or 16.

18. The display device according to claim 17 **characterized in that** said display is a liquid crystal display, a CRT display, a projection television, a plasma display, or an EL display.

## Patentansprüche

1. Anti-Schmierflecken-Mittel,
**dadurch gekennzeichnet, daß**
es eine Organosiliciumverbindung enthält, die durch die nachstehende allgemeine Formel (1) wiedergegeben wird:
R^{f2}-(OC₃F₆)ₙ₂-O-(CF₂)ₘ₂-(CH₂)₁₂-Z-(CH₂)ₛ₂-Si-(R²)₃ (1)
worin R^{f2} eine lineare oder verzweigte Perfluoralkylgruppe mit 1 bis 16 Kohlenstoffatomen ist; R² eine hydrolytische Gruppe ist; Z -OOCNH- oder -O- ist; n2 eine ganze Zahl von 1 bis 50 ist; m2 eine ganze Zahl von 0 bis 3 ist; 12 eine ganze Zahl von 0 bis 3 ist; und s2 eine ganze Zahl von 1 bis 6 ist, mit der Maßgabe, daß m2 und 12 der Bedingung 6≥m2+12>0 genügen.

2. Anti-Schmierflecken-Mittel nach Anspruch 1,
**dadurch gekennzeichnet, daß**
das R² in der allgemeinen Formel (1) eine Alkoxygruppe mit 1 bis 10 Kohlenstoffatomen ist.

3. Anti-Schmierflecken-Mittel,
**dadurch gekennzeichnet, daß**
es eine Organosiliciumverbindung enthält, die durch die nachstehende allgemeine Formel (3) wiedergegeben wird: 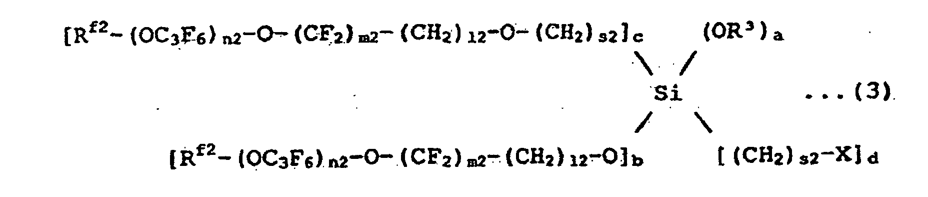 worin R^{f2} eine lineare oder verzweigte Perfluoralkylgruppe mit 1 bis 16 Kohlenstoffatomen ist; R³ eine Alkylgruppe mit 1 bis 10 Kohlenstoffatomen ist; X ein Halogenatom ist; n2 eine ganze Zahl von 1 bis 50 ist; m2 eine ganze Zahl von 0 bis 3 ist; 12 eine ganze Zahl von 0 bis 3 ist; und s2 eine ganze Zahl von 1 bis 6 ist; a eine ganze Zahl von 0 bis 3 ist; b eine ganze Zahl von 0 bis 3 ist; c 0 oder 1 ist; d 0 oder 1 ist; mit der Maßgabe, daß m2, 12, a, b, c und d den Bedingungen 6≥m2+12>0, a+b=3 und c+d=1 genügen.

4. Anti-Schmierflecken-Mittel nach Anspruch 3,
**dadurch gekennzeichnet, daß**
die Organosiliciumverbindung aus einer ersten Organosiliciumverbindung, die durch die allgemeine Formel (3) wiedergegeben wird, und einer zweiten Organosiliciumverbindung, die durch die allgemeine Formel (3) wiedergegeben wird, gebildet ist, und die erste Organosiliciumverbindung und die zweite Organosiliciumverbindung sich in den Bestandteilen "a", "b", "c" und "d" in der allgemeinen Formel (3) unterscheiden.

5. Verfahren zur Herstellung einer Anti-Schmierflecken-Schicht,
**dadurch gekennzeichnet, daß**
es einen Schritt der Abscheidung des Anti-Schmierflecken-Mittels nach einem der Ansprüche 1 bis 4 auf einem Behandlungssubstrat umfasst.

6. Verfahren zur Herstellung einer Anti-Schmierflecken-Schicht nach Anspruch 5,
**dadurch gekennzeichnet, daß**
das Anti-Schmierflecken-Mittel auf dem Behandlungssubstrat mittels eines Verfahrens der Nassbeschichtung abgeschieden wird.

7. Verfahren zur Herstellung einer Anti-Schmierflecken-Schicht nach Anspruch 5,
**dadurch gekennzeichnet, daß**
das Anti-Schmierflecken-Mittel auf dem Behandlungssubstrat mittels eines Verfahrens der Trockenbeschichtung abgeschieden wird.

8. Verfahren zur Herstellung einer Anti-Schmierflecken-Schicht nach einem der Ansprüche 5 bis 7, das des Weiteren einen Schritt umfasst, in dem die Anti-Schmierflecken-Schicht, die auf dem Behandlungssubstrat unter Verwendung des Anti-Schmierflecken-Mittels gebildet wurde, einem Erwärmen, einer Befeuchtung, einer Bestrahlung mit Licht oder einer Bestrahlung mit Elektronenstrahlen unterzogen wird.

9. Verfahren zur Herstellung einer Anti-Schmierflecken-Schicht,
**dadurch gekennzeichnet, daß**
es die nachstehenden Schritte umfasst:
Imprägnieren eines porösen Formkörpers mit dem Anti-Schmierflecken-Mittel nach einem der Ansprüche 1 bis 4; und
Erwärmen des porösen Formkörpers, der mit dem Anti-Schmierflecken-Mittel imprägniert wurde, im Vakuum, wodurch das Anti-Schmierflecken-Mittel verdampft und eine Anti-Schmierflecken-Schicht auf dem Behandlungssubstrat gebildet wird.

10. Verfahren zur Herstellung einer Anti-Schmierflecken-Schicht nach Anspruch 9, das des Weiteren einen Schritt umfasst, in dem die Anti-Schmierflecken-Schicht, die auf dem Behandlungssubstrat unter Verwendung des Anti-Schmierflecken-Mittels gebildet wurde, einem Erwärmen, einer Befeuchtung, einer Bestrahlung mit Licht oder einer Bestrahlung mit Elektronenstrahlen unterzogen wird.

11. Verfahren zur Herstellung einer Anti-Schmierflecken-Schicht nach Anspruch 9,
**dadurch gekennzeichnet, daß**
der poröse Formkörper aus mindestens einer Art von Materialien aufgebaut ist, ausgewählt aus der Gruppe bestehend aus SiO₂, TiO₂, ZrO₂, MgO, Al₂O₃, CaSO₄, Cu, Fe, Al, rostfreiem Stahl und Kohlenstoff.

12. Verfahren zur Herstellung einer Anti-Schmierflecken-Schicht nach Anspruch 9,
**dadurch gekennzeichnet, daß**
das Heizverfahren zum Verdampfen des Anti-Schmierflecken-Mittels, mit dem der poröse Formkörper imprägniert wurde, mindestens ein Verfahren ist, ausgewählt aus einem Widerstands-Heizverfahren, einem Elektronenstrahl-Heizverfahren, einem Ionenstrahl-Heizverfahren, einem Hochfrequenz-Heizverfahren und einem Licht-Heizverfahren.

13. Optisches Element mit Antireflexions-Eigenschaften, das ein transparentes Substrat; einen auf mindestens einer Fläche des transparenten Substrates gebildeten Film mit Antireflexions-Eigenschaften; und eine auf der äußersten Fläche gebildete Anti-Schmierflecken-Schicht umfaßt;
**dadurch gekennzeichnet, daß**
die Anti-Schmierflecken-Schicht das Anti-Schmierflecken-Mittel nach einem der Ansprüche 1 bis 4 enthält.

14. Optisches Element mit Antireflexions-Eigenschaften nach Anspruch 13,
**dadurch gekennzeichnet, daß**
das transparente Substrat ein aus einem transparenten Substrat gebildetes organisches Substrat oder ein aus einem Glassubstrat gebildetes anorganisches Substrat ist.

15. Optisches funktionelles Element,
**dadurch gekennzeichnet, daß**
es das optisches Element mit Antireflexions-Eigenschaften nach Anspruch 13 und ein funktionelles optisches Element umfasst, das an das optischen Element mit Antireflexions-Eigenschaften geklebt ist.

16. Optisches funktionelles Element nach Anspruch 15,
**dadurch gekennzeichnet, daß**
das funktionelle optische Element eine Polarisationsplatte ist.

17. Anzeigevorrichtung, die einen Bildschirm mit einer Vorderseite umfaßt, auf deren Oberfläche mittels eines Klebstoffes ein Überzugselement befestigt ist,
**dadurch gekennzeichnet, daß**
das Überzugselement das optische funktionelle Element nach Anspruch 15 oder Anspruch 16 ist.

18. Anzeigevorrichtung nach Anspruch 17,
**dadurch gekennzeichnet, daß**
die Anzeige eine Flüssigkristallanzeige, eine Kathodenstrahlröhrenanzeige, Projektionsfernsehen, eine Plasmaanzeige oder eine EL-Anzeige ist.

## Revendications

1. Agent antisalissures **caractérisé en ce qu'**il contient un composé organique du silicium représenté par la formule générale suivante (1) : 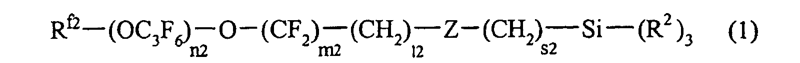 dans laquelle R^{f2} est un groupe perfluoroalkyle linéaire ou ramifié ayant 1 à 16 atomes de carbone ; R² est un groupe hydrolytique ; Z est un groupe -OOCNH- ou -O- ; n2 est un entier de 1 à 50 ; m2 est un entier de 0 à 3 ; 12 est un entier de 0 à 3 ; et s2 est un entier de 1 à 6, à condition que ces m2 et 12 satisfassent à la condition 6≥m2+ 12>0.

2. Agent antisalissures selon la revendication 1, **caractérisé en ce que** ledit groupe R² dans ladite formule générale (1) est un groupe alcoxy ayant 1 à 10 atomes de carbone.

3. Agent antisalissures **caractérisé en ce qu'**il contient un composé organique du silicium représenté par la formule générale suivante (3) : 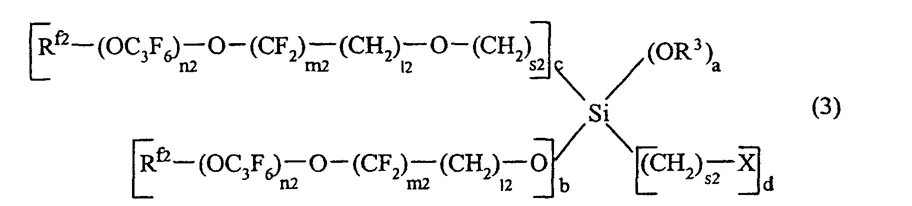 dans laquelle R^{f2} est un groupe perfluoroalkyle linéaire ou ramifié ayant 1 à 16 atomes de carbone ; R³ est un groupe alkyle ayant 1 à 10 atomes de carbone ; X est un atome d'halogène ; n2 est un entier de 1 à 50 ; m2 est un entier de 0 à 3 ; 12 est un entier de 0 à 3 ; et s2 est un entier de 1 à 6 ; a est un entier de 0 à 3 ; b est un entier de 0 à 3 ; c est 0 ou 1 ; d est 0 ou 1 ; à condition que ces m2, 12, a, b, c et d satisfassent aux conditions 6 ≥ m2 +12 > 0, a + b = 3 et c + d = 1.

4. Agent antisalissures selon la revendication 3, **caractérisé en ce que** ledit composé organique du silicium est formé d'un premier composé organique du silicium représenté par ladite formule générale (3) et d'un deuxième composé organique du silicium représenté par ladite formule générale (3) et **en ce que** ledit premier composé organique du silicium et ledit deuxième composé organique du silicium sont différents l'un de l'autre en ce qui concerne les constituants "a", "b", "c" et "d" dans ladite formule générale (3).

5. Procédé pour former une couche antisalissures **caractérisé par le fait qu'**il comprend une étape de dépôt de l'agent antisalissures selon l'une quelconque des revendications 1 à 4 sur un substrat à traiter.

6. Procédé pour former une couche antisalissures selon la revendication 5, **caractérisé par** le dépôt de l'agent antisalissures sur un substrat à traiter au moyen d'un procédé de revêtement à l'état humide.

7. Procédé pour former une couche antisalissures selon la revendication 5, **caractérisé par** le dépôt de l'agent antisalissures sur un substrat à traiter au moyen d'un procédé de revêtement à sec.

8. Procédé pour former une couche antisalissures selon l'une quelconque des revendications 5 à 7, comprenant en outre une étape consistant à soumettre ladite couche antisalissures, qui a été formée sur le substrat à traiter en utilisant ledit agent antisalissures, à un chauffage, à une humidification, à une irradiation à la lumière ou à une irradiation avec un faisceau d'électrons.

9. Procédé pour former une couche antisalissures, **caractérisé par le fait qu'**il comprend les étapes consistant à :
imprégner un corps moulé poreux avec l'agent antisalissures selon l'une quelconque des revendications 1 à 4 ; et
chauffer sous vide ledit corps moulé poreux imprégné avec ledit agent antisalissures en évaporant ainsi ledit agent antisalissures et en formant une couche antisalissures sur un substrat à traiter.

10. Procédé pour former une couche antisalissures selon la revendication 9, comprenant en outre une étape consistant à soumettre ladite couche antisalissures, qui a été formée sur le substrat à traiter en utilisant ledit agent antisalissures, à un chauffage, à une humidification, à une irradiation à la lumière ou à une irradiation avec un faisceau d'électrons.

11. Procédé pour former une couche antisalissures selon la revendication 9, **caractérisé en ce que** ledit corps moulé poreux est constitué par au moins un type des matériaux choisis dans le groupe constitué par SiO₂, TiO₂, ZrO₂, MgO, Al₂O₃, CaSO₄, Cu, Fe, Al, l'acier inoxydable et le carbone.

12. Procédé pour former une couche antisalissures selon la revendication 9, **caractérisé en ce que** le procédé de chauffage pour évaporer ledit agent antisalissures imprégné dans ledit corps moulé poreux est au moins un procédé choisi parmi un procédé de chauffage par résistance, un procédé de chauffage avec un faisceau d'électrons, un procédé de chauffage avec un faisceau ionique, un procédé de chauffage haute-fréquence et un procédé de chauffage à la lumière

13. Elément optique empêchant la réflexion comprenant un substrat transparent ; un film empêchant la réflexion formé sur au moins une surface dudit substrat transparent ; et une couche antisalissures formée sur une surface externe; **caractérisé en ce que** ladite couche antisalissures contient l'agent antisalissures de l'une quelconque des revendications 1 à 4.

14. Elément optique empêchant la réflexion selon la revendication 13, **caractérisé en ce que** ledit substrat transparent est un substrat organique formé d'un substrat transparent ou un substrat inorganique formé d'un substrat en verre.

15. Elément optique fonctionnel **caractérisé par le fait qu'**il comprend l'élément optique empêchant la réflexion de la revendication 13 et un élément optique fonctionnel collé sur ledit élément optique empêchant la réflexion.

16. Elément optique fonctionnel selon la revendication 15, **caractérisé par le fait que** ledit élément optique fonctionnel est une plaque de polarisation.

17. Dispositif de visualisation comprenant un écran de visualisation comportant une face avant, sur la surface de laquelle on colle un élément de revêtement par l'intermédiaire d'un adhésif, **caractérisé en ce que** ledit élément de revêtement est l'élément optique fonctionnel de la revendication 15 ou 16.

18. Dispositif de visualisation selon la revendication 17, **caractérisé en ce que** ledit dispositif de visualisation est un écran à cristaux liquides, un écran TCR, un récepteur de télévision à projection, un écran à plasma ou un écran EL.
